Europäisches Patentamt

European Patent Office

Office européen des brevets

(19)

(11) Veröffentlichungsnummer: **0 293 654 B1**

(12) # EUROPÄISCHE PATENTSCHRIFT

(45) Veröffentlichungstag der Patentschrift: **04.03.92**

(51) Int. Cl.5: **A61C 17/00**

(21) Anmeldenummer: **88107652.5**

(22) Anmeldetag: **12.05.88**

(54) **Scaler für die Zahnreinigung.**

(30) Priorität: **03.06.87 CH 2107/87**

(43) Veröffentlichungstag der Anmeldung:
**07.12.88 Patentblatt 88/49**

(45) Bekanntmachung des Hinweises auf die
Patenterteilung:
**04.03.92 Patentblatt 92/10**

(84) Benannte Vertragsstaaten:
**DE FR GB IT**

(56) Entgegenhaltungen:
**EP-A- 0 221 460**
**DE-A- 3 320 211**
**DE-C- 3 438 462**

(73) Patentinhaber: **MIKRONA TECHNOLOGIE AG**
**Weingartenstrasse 8**
**CH-8957 Spreitenbach(CH)**

Patentinhaber: **Römhild, Ludwig, Dr.**
**Am Kugelfeld 3**
**W-8240 Berchtesgaden(DE)**

(72) Erfinder: **Römhild, Ludwig, Dr.**
**Am Kugelfeld 3**
**W-8240 Berchtesgaden(DE)**
Erfinder: **Hartmann, Peter**
**Gugelweg 15**
**CH-5115 Möriken(CH)**
Erfinder: **Reinhard, Peter**
**Weingartenstrasse 8**
**CH-8957 Spreitenbach(CH)**

(74) Vertreter: **EGLI-EUROPEAN PATENT ATTOR-**
**NEYS**
**Horneggstrasse 4**
**CH-8008 Zürich(CH)**

## Beschreibung

Die Erfindung betrifft einen Scaler für die Zahnreinigung gemäss dem Oberbegriff des Anspruchs 1. Derartige Scaler dienen der Reinigung der Zähne, insbesondere ihrer unter dem Zahnfleisch liegenden Partien von Zahnstein, Konkrementen und Wurzelzement bei der zahnärztlichen Behandlung.

Aus der EP-A-0 221 460, Ausführung gemäss Fig. 11 ist ein gattungsgemässer stabförmiger Scaler bekannt, bei welchem die Bewegungsrichtung des Schabegeräts der Richtung der Antriebswelle entspricht. Mit einem derartigen Scaler sind bestimmte Teile insbesondere im Rachenbereich liegender Zähne nur schwer zugänglich, sodass ihre Behandlung erhebliche Mühe bereitet.

Es stellte sich daher die Aufgabe, einen Scaler anzugeben, der prinzipiell die gleiche Funktion erfüllt, bei dem jedoch der besseren Zugänglichkeit bestimmter Zahnpartien halber das Gehäuse als Winkelstück ausgebildet ist und die Bewegungsrichtung des Schabegeräts mit der Antriebswelle einen Winkel einschliesst.

Zur Lösung dieser Aufgabe musste vor allem eine neue Lösung für das Problem, die Drehbewegung einer Welle in eine Hinundherbewegung des Schabegeräts mit ruckartiger Rückbewegung umzusetzen, gefunden werden, da die bekannte Lösung wegen des Winkels zwischen der Welle und der Bewegungsrichtung des Schabegeräts nicht einfach übernommen werden konnte.

Es ist zwar aus der DE-A-3 320 211 eine Lösung für die Umsetzung der Drehbewegung einer Antriebswelle in eine hin- und hergehende Bewegung mit ruckartiger Vorwärtsbewegung bekannt, die prinzipiell mit geringen Anpassungen für die Lösung der vorliegenden Aufgabe übernommen hätte werden können. Jedoch wird bei dem in dieser Schrift offenbarten Gerät die oszillatorische Bewegung durch den direkten Eingriff des Mitnehmerstifts in eine Ausnehmung am in Bewegung zu versetzenden Teil erzeugt. Der ruckartige Teil der Bewegung ist auf diese Weise nur so zu bewirken, dass der Rand besagter Ausnehmung eine scharfe Kante aufweist, über die der Mitnehmerstift mit beträchtlichem Druck geführt wird. Eine derartige Lösung führt zu rascher Abnützung des Mitnehmerstifts wie auch der besagten Kante, sodass diese Teile nach verhältnismässig kurzen Betriebszeiten ersetzt werden müssen. Ausserdem können unerwünschte Rückwirkungen auf die Welle und die Antriebseinheit auftreten.

Demgegenüber bestand die Aufgabe der Erfindung darin, einen Scaler zu konstruieren, bei dem das Problem der Umsetzung der Bewegung der Antriebswelle in eine mit derselben einen Winkel einschliessende Hinundherbewegung des Schabegeräts so gelöst ist, dass wie bei der bekannten gattungsgemässen Lösung die Bewegungen seiner Teile möglichst erschütterungsfrei und materialschonend erfolgen.

Diese Aufgabe wird durch die Erfindung, wie sie in den Ansprüchen gekennzeichnet ist, gelöst. Bei der erfindungsgemässen Lösung wird die ruckartige Bewegung durch das Voreilen eines Exzenterkörpers hervorgerufen.

Die Bewegungsabläufe sind verhältnismässig glatt, die ruckartige Drehbewegung des Exzenterkörpers wird von einer breiten Exzenterfläche abgefangen, sodass im Ganzen keine hohen mechanischen Belastungen auftreten.

Ein Ausführungsbeispiel der Erfindung ist in der Zeichnung dargestellt und nachfolgend beschrieben. Es zeigen:

Fig. 1      einen Längsschnitt eines Scalers, dessen Schabegerät in einem in einem Winkel zum Griffgehäuse liegenden Werkzeuggehäuse gelagert ist,

Fig. 2      einen Schnitt längs der Linie II - II des Scalers in Fig. 1,

Fig. 3      einen Schnitt längs der Linie III - III des Scalers in Fig. 1 und

Figs. 4a & 4b      eine Stirnansicht der an der Antriebswelle des Scalers angeordneten Antriebsteile, wobei Fig.4a den Exzenterkörper vor und Fig. 4b nach dem Umkippen zeigt.

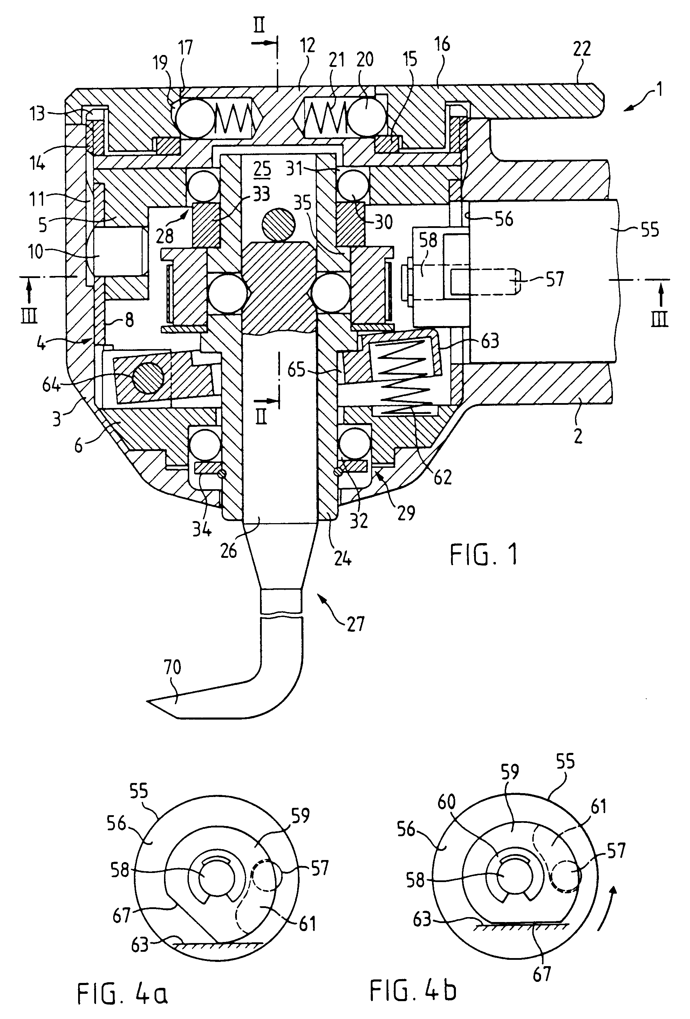

Der in Fig. 1 dargestellte Scaler 1 weist ein als Winkelstück ausgebildetes Gehäuse auf, das sich aus einem nur teilweise dargestellten Griffgehäuse 2 und einem Werkzeuggehäuse 3 zusammensetzt. Das Griffgehäuse 2 kann in bekannter Weise mit dem Motor oder mit der flexiblen Welle des Hauptantriebes einer zahnärztlichen Einrichtung gekuppelt werden. Der Scaler nach Fig. 1 benötigt somit keinen eigenen Antrieb wie der eingangs erwähnte bekannte Scaler.

Im Werkzeuggehäuse 3 ist ein Innengehäuse 4 eingesetzt, welches aus einem oberen Lagersteg 5, einem unteren Lagersteg 6 und einem dazwischenliegenden Stützring 8 besteht. Ein Führungsbolzen 10 verbindet den oberen Lagersteg 5 und den Stützring 8 und ragt in eine an der Innenwand des Werkzeuggehäuses eingearbeitete Führungsnut 11. Auf diese Weise ist das Innengehäuse 4 gegenüber dem Werkzeuggehäuse 3 positioniert.

Auf dem oberen Lagersteg 5 ist ein Deckel 12 aufgelegt, der zusammen mit dem Innengehäuse 4 durch eine, in ein in der Innenwand des Werkzeuggehäuses 3 angeordnetes Innengewinde 14 eingeschraubte Ringmutter 13 festgeklemmt wird. In den Deckel 12 ist ein Kugelhaltering 15 eingelegt.

Der Deckel 12 wird von einem, eine Bohrung 17 aufweisenden Schaltring 16 umfasst. In der Bohrung 17 des Schaltringes 16 ist eine Radialrille eingearbeitet, in die durch eine Feder 21 belastete Rastkörper 20, z.B. Kugeln, für die Halterung des Schaltringes 16 einrasten. Zur Positionierung des Schaltringes 16 sind zwei Positionierausnehmungen 19 (eine davon in Fig. 1 sichtbar) für den Eingriff eines der Rastkörper 20 vorgesehen. Der Schaltring 16 ist mit zu seiner Verstellung dienenden Verstellmitteln, z.B. einem Hebel 22 oder einer Randrierung (nicht dargestellt) versehen.

Im Innengehäuse 4 ist eine Lagerhülse 24 gelagert, welche eine Bohrung 25 zur Aufnahme des Schaftes 26 eines Schabegerätes 27 aufweist. Die Lagerhülse 24 ist an ihren Enden in Lagern 28, 29 axial verschiebbar geführt. Die Lager 28, 29 sind als Wälzlager mit Wälzkugeln 30 ausgebildet, die in Ausnehmungen 31, 32 des Innengehäuses 4 liegen, wobei die Ausnehmung 31 des oberen Lagers 28 durch den Deckel 12 und durch einen Stützring 33 und die Ausnehmung 32 des unteren Lagers 29 durch den unteren Lagersteg 6 und einen an der Lagerhülse 24 abgestützten Stützring 34 begrenzt ist.

Die Lagerhülse 24 weist eine zwischen den Lagern 28, 29 liegende Partie 35 grösserer Wandstärke auf.

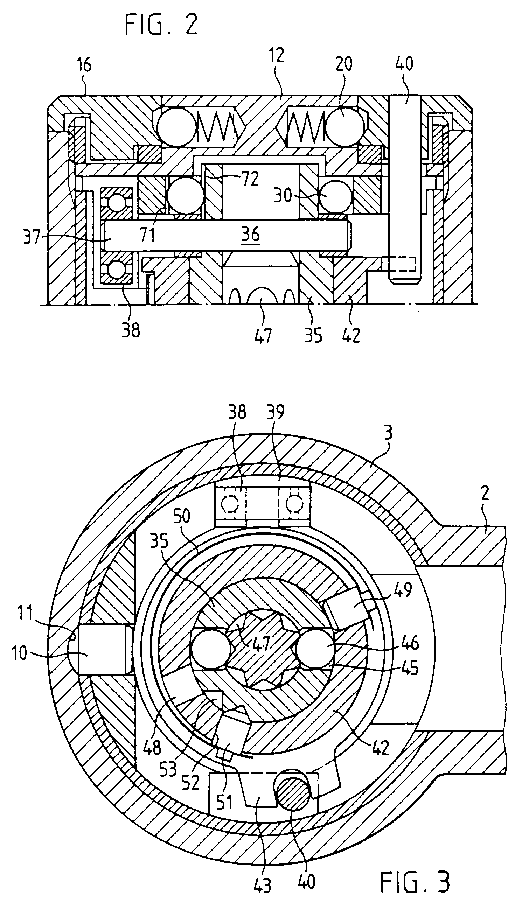

In Fig. 2 ist der obere Teil des Werkzeuggehäuses 3 dargestellt. Ueber der Partie 35 grösserer Wandstärke der Lagerhülse 24 erstreckt sich ein Sicherungstift 36 diagonal durch die Lagerhülse 24, welcher an seinem einen Ende 37 ein Wälzlager 38 trägt, das in einem Schlitz 39 des oberen Lagersteges 5 geführt ist. Durch den im Schlitz 39 geführten Sicherungstift 36 wird eine Rotation der Lagerhülse 24 verunmöglicht. Dies ist wesentlich, da mit dem Scaler Seitenkräfte ausgeübt werden, unter denen die Lagerhülse 24 nicht ausweichen darf.

In Fig. 2 ist auch ein im Schaltring 16 befestigter Mitnehmerstift 40 befestigt, der in dem Bereich der Partie 35 grösseren Durchmessers der Lagerhülse 24 ragt die von einem Kupplungsring 42 umgeben ist, die an ihrem Aussenumfang eine Schaltgabel 43 aufweist, in welche der Mitnehmerstift 40 ragt, siehe Fig. 3.

Die Funktion des Kupplungsringens 42 kann am besten anhand von Fig. 3 erläutert werden.

In der Partie 35 der Lagerhülse 24 sind zwei diametral gegenüberliegende Bohrungen 45 angeordnet, in denen Kupplungskörper 46, z.B. Kugeln, geführt sind, welche in der in Fig. 3 dargestellten Lage in am Aussenumfang des Schaftes 26 des Schabegerätes 27 angeordnete Vertiefungen 47 ragen und damit den Schabekörper mit der Lagerhülse 24 kuppeln. Zum Entkuppeln, d.h. zum Wechseln oder zum Drehen des Schabegerätes in eine neue Position wird der Kupplungsring 42 so lange gedreht, bis zwei darin diametral angeordnete Bohrungen 48 mit den Bohrungen 45 der Lagerhülse 24 fluchten. In der einen Bohrung 48 des Kupplungsringes 42 ist ein Druckbolzen 49 durch eine Ringfeder 50 gehalten. Das andere Ende der Ringfeder 50 wirkt auf einen Positionierbolzen 51, welcher in einer Bohrung 52 des Kupplungsringes 42 angeordnet ist und in am Aussenumfang der Lagerhülse 24 angeordnete Vertiefungen 53 ragt.

In der in Fig. 3 gezeichneten Lage sind die Kupplungskörper 46 in Vertiefungen 47 des Schaftes 26 blockiert. Wird nun der Kupplungsring 42 im Uhrzeigersinn gedreht, bis die Bohrungen 48 mit den Bohrungen 45 fluchten, können die Kupplungskörper 46 in die Bohrungen 48 ausweichen, so dass das Schabegerät 27 ausgewechselt, entfernt oder in eine neue Position gedreht werden kann. In der entkuppelten Lage ist der Positionierbolzen 51 in die benachbarte Vertiefung 53 eingerastet. Dadurch lässt sich die Kupplungs- und die Entkupplungslage des Kupplungsringes 42 einhalten. Die Verschiebung des Kupplungsringes 42 erfolgt durch Drehen des Schaltringes 16, wodurch der Mitnehmerstift 40 die Schaltgabel 42 und damit den Kupplungsring 42 in die gewünschte Lage dreht.

Der für den Scaler typische Bewegungsablauf wird am besten anhand von Fig. 1 und Fig. 4 beschrieben.

Im Griffgehäuse 2 ist eine Antriebswelle 55 drehbar gelagert. Sie weist an ihrem Ende beim Uebergang des Griffgehäuses 2 an der Stirnseite 56 einen Mitnehmerstift 57 auf. Der Mitnehmerstift 57 ist exzentrisch zur Achse der Antriebswelle 55 angeordnet. Koaxial zur Antriebswelle 55 ist ein Lagerstift 58 angoerdnet, auf welchem ein Exzenterkörper 59 drehbar gelagert ist. Der Exzenterkörper 59 ist durch einen Sprengring 60 gesichert. Der Exzenterkörper 59 weist eine gegen die Stirnseite 56 der Antriebswelle 55 gerichtete Ausnehmung 61 auf, welche sich etwa über 40 - 70° des Umfangs erstreckt und in welche der Mitnehmerstift 57 ragt.

Der Exzenterkörper 59 steht in Verbindung mit einer durch eine Feder 62 belastete Wippe 63, welche um eine Schwenkachse 64 schwenkbar ist. Die Wippe 63 erstreckt sich im wesentlichen über den vom Stützring 8 gebildeten Innenraum und weist einen Durchgang 65 für die Lagerhülse 24 auf, so dass die Feder 62 und die Schwenkachse 64 auf entgegengesetzten Seiten der Lagerhülse 24 liegen.

Mit Hilfe des im Bereich der Ausnehmung 61 frei beweglichen Exzenterkörpers 59 wird die gewünschte ruckartige Scalerbewegung gegen das Werkzeuggehäuse 3 wie folgt erreicht.

In Fig. 4 ist die Bewegungsrichtung der Antriebswelle 55 durch einen Pfeil im Gegenuhrzeigersinn angegeben. Der Mitnehmerstift 57 liegt an dem in Fig. 4a dargestellten Ende der Ausnehmung 61 und nimmt den Exzenterkörper 59 mit.

Wenn die Unterkante 66 des Exzenterkörpers 59 die in Fig. 4a dargestellten Lager erreicht hat, kippt der Exzenterkörper in die in Fig. 4b dargestellte Lage, wodurch sich die federbelastete Wippe 63 ruckartig an die Exzenterfläche 67 legt, was auch die ruckartige Bewegung des Schabegerätes 27 bewirkt. Der Mitnehmerstift 57 kann dieser ruckartigen Bewegung des Exzenterkörpers 59 nicht folgen und bleibt zurück, siehe Fig.4b. Er nimmt erst nach der erneuten Uebernahme seiner Lage in der Ausnehmung 61 nach Fig.4a den Exzenterkörper 59 wieder mit. Dieses ruckartige Vorlaufen des Exzenterkörpers 59 wiederholt sich bei jeder Umdrehung der Antriebswelle 55.

Es sei noch erwähnt, dass die ruckartige Bewegung des Schabegerätes 27 nur dann auftritt, wenn seine Schneide 70 an einem Zahn angesetzt wird und die Lagerhülse von dem Werkzeuggehäuse 3 wegbewegt wird. Greift die Schneide 70 nicht an einem Zahn an, wird die Lagerhülse 24 gegen den Deckel 12 bewegt, und es findet keine Hin- und Herbewegung des Schabegeräte 27 statt.

Es sind innerhalb des Erfindungsgedankens einige Varianten für die Ausführung des Scalers denkbar. So kann die Lagerhülse 24 anstatt in Wälzlagern 28, 29 in Gleitlagern gelagert sein, wodurch möglicherweise eine etwas grössere Reibung auftreten kann. Weiter kann, siehe Fig. 2, anstelle des Sicherungstiftes 36 zur Verhinderung einer Rotation der Lagerhülse 35 eine der Kugeln 30 etwas grösser gewählt werden, welche in Nuten 71, 72 ragt, welche im Innengehäuse 4 und in der Lagerhülse 24 ausgespart werden.

Durch die beschriebene Ausbildung des Werkzeuggehäuses 3 wird erreicht, dass die für den Einsatz eines Scalers erforderliche ruckartige Bewegung der Schneide in Richtung des Werkzeuggehäuses 3 in verhältnismässig einfacher Weise durch den in einem gewissen Winkelbereich frei bewegbaren Exzenterkörper 59 erreicht wird.

**Patentansprüche**

1. Scaler für die Zahnreinigung mit einem eine Schneide (70) aufweisenden Schabegerät (27) und einem Werkzeuggehäuse (3), in welchem eine Lagerhülse (24), in welcher das Schabegerät (27) gehaltert ist, axial verschieblich geführt ist sowie mit einer in Rückzugsrichtung wirkenden Feder (62) und einem an einer Antriebswelle (55) exzentrisch angebrachten Mitnehmerstift (57), welche mit der Lagerhülse (24) derart mechanisch gekoppelt sind, dass das Schabegerät (27) eine zum Werkzeuggehäuse (3) hin verhältnismässig schnelle, schlag- oder ruckartig erfolgende Hinbewegung und eine vom Werkzeuggehäuse (3) weg verhältnismässig langsam erfolgende Herbewegung ausführt, **dadurch gekennzeichnet, dass** an das Werkzeuggehäuse (3) derart ein Griffgehäuse (2), durch welches die Antriebswelle (55) geführt ist, anschliesst, dass es mit dem Werkzeuggehäuse (3) zusammen ein als Handgriff geeignetes Winkelstück (1) bildet und zur Kopplung des Mitnehmerstifts (57) an die Lagerhülse (24), deren Bewegungsrichtung einen Winkel mit der Antriebswelle (55) einschliesst, ein koaxial zur Welle drehbar gelagerter Exzenterkörper (59) mit einer umfangsseitigen Ausnehmung (61) zur ein Voreilen des Exzenterkörpers (59) erlaubenden Aufnahme des Mitnehmerstifts (57) und einer Exzenterfläche (67) vorgesehen ist.

2. Scaler nach Anspruch 1, **dadurch gekennzeichnet, dass** er eine Wippe (63) aufweist, auf welche zur Erzeugung einer hin- und hergehenden Bewegung die Feder (62) und die Exzenterfläche (67) einwirken und welche ihrerseits bei Rückbewegungen auf die Lagerhülse (24) einwirkt.

3. Scaler nach Anspruch 1 oder 2, dadurch gekennzeichnet, dass die Lagerhülse (24) in einem Innengehäuse (4) gelagert ist, welches aus einem obern Lagersteg (5), einem untern Lagersteg (6) und einem zwischen den Lagerstegen liegenden Stützring (8) gebildet ist.

4. Scaler nach Anspruch 1, dadurch gekennzeichnet, dass das Werkzeuggehäuse (3) durch einen dem Schabegerät (27) gegenüberliegenden Deckel (12) abgeschlossen ist.

5. Scaler nach Anspruch 4, dadurch gekennzeichnet, dass der Deckel (12) durch eine Ringmutter (13), welche in ein an der Innenwand des Werkzeuggehäuses (3) angeordnetes Innengewinde (14) eingeschraubt ist, gegen das Innengehäuse (4) festgezogen ist.

6. Scaler nach Anspruch 2, dadurch gekennzeichnet, dass die Lagerhülse (24) an ihren Enden in Lagern (28, 29) gelagert ist, wobei zwischen den Lagern Kupplungsmittel (45 - 53) in der Lagerhülse (24) und in einem Kupplungsring (42) angeordnet sind.

7. Scaler nach Anspruch 6, dadurch gekennzeichnet, dass die Kupplungsmittel in Radialbohrungen (45) der Lagerhülse (24) verschiebbare Kupplungskörper (46) sind, denen im Kupplungsring (42) liegende Radialbohrungen (48) mit einem durch eine Ringfeder (50) beaufschlagten Druckbolzen (49) in der Entkupplungsstellung zugeordnet sind, wobei der Kupplungsring (42) einen in einer Radialbohrung (52) geführten, federbelasteten Positionierbolzen (51) aufweist, welcher in zwei die Entkupplungstellung und die Kupplungstellung definierende Positioniervertiefungen (53) in der Lagerhülse (24) einrastbar ist.

8. Scaler nach Anspruch 7, dadurch gekennzeichnet, dass der Kupplungsring (42) eine Schaltgabel (43) aufweist, durch welche er von einem Mitnehmerstift (40) in die Entkupplungs- und Kupplungsstellung schwenkbar ist.

9. Scaler nach Anspruch 8, dadurch gekennzeichnet, dass der Mitnehmerstift (40) in einem auf dem Deckel (12) geführten drehbaren Schaltring (16) befestigt ist.

10. Scaler nach Anspruch 4, dadurch gekennzeichnet, dass der Deckel (12) gefederte Rastkörper (20) aufweist, die in eine Radialrille (18) einrasten und von denen ein Rastkörper in eine von zwei Positionierausnehmungen (19) des Schaltringes (16) einrastbar sind.

11. Scaler nach Anspruch 6, dadurch gekennzeichnet, dass die Lager (28, 29) durch Wälzkugeln (30) gebildete Wälzlager sind, die in Ausnehmungen (31, 32) des obern und des untern Lagersteges (5, 6) angeordnet und durch an der Lagerhülse (24) angeordnete Stützringe (33, 34) begrenzt sind.

12. Scaler nach Anspruch 2, dadurch gekennzeichnet, dass die Lagerhülse (24) durch Sicherungsmittel, z.B. einen im oberen Lagersteg (5) geführten Sicherungstift (36) oder durch eine in Vertiefungen (71, 72) des oberen Lagersteges (5) und der Lagerhülse (24) eingesetzte Kugel, unverdrehbar, jedoch axial verschiebbar im Werkzeuggehäuse (3) gehalten ist.

13. Scaler nach Anspruch 1, dadurch gekennzeichnet, dass im Schaft (26) des Schabegerätes (27) mehrere Vertiefungen (47) am Schaftumfang eingearbeitet sind mit denen die Schneide (70) in verschiedenen Winkelstellungen zum Griffgehäuse fest fixierbar ist.

**Claims**

1. Scaler for cleaning teeth having a scraping instrument (27), which has a cutting edge (70), and a tool housing (3) in which a bearing sleeve (24), in which the scraping instrument (27) is supported, is guided in an axially displaceable manner and also having a spring (62) acting in the return direction and a carrier pin (57) which is provided eccentrically on a drive shaft (55) and which is mechanically coupled with the bearing sleeve (24) in such a way that the scraping instrument (27) executes a movement towards the tool housing (3) which occurs in a comparatively rapid, sudden or abrupt manner and a movement away from the tool housing (3) which occurs comparatively slowly, characterised in that a grip housing (2), through which the drive shaft (55) is guided, is connected to the tool housing (3) in a such a way that together with the tool housing (3) it forms an angular piece (1) which is suitable as a handle and, for the purpose of coupling the carrier pin (57) to the bearing sleeve (24), the direction of movement of which encloses an angle with the drive shaft (55), there is provided an eccentric body (59), which is rotatably mounted coaxially relative to the shaft, with a recess (61) on the peripheral side for the purpose of receiving the carrier pin (57) permitting the eccentric body (59) to advance and an eccentric surface (67).

2. Scaler according to claim 1, characterised in that it has a rocker (63) on which, for the purpose of generating a reciprocating movement, there act the spring (62) and the eccentric surface (67) and which, for its part, acts on the bearing sleeve (24) in the case of return movements.

3. Scaler according to claim 1 or 2, characterised in that the bearing sleeve (24) is mounted in an inner housing (4) which is formed from an upper bearing bar (5), a lower bearing bar (6) and a support ring (8) lying between the bearing bars.

4. Scaler according to claim 1, characterised in that the tool housing (3) is closed by means of a cover (12) which lies opposite the scraping instrument (27).

5. Scaler according to claim 4, characterised in that the cover (12) is drawn fast against the inner housing (4) by means of a ring nut (13) which is screwed into an internal thread (14) arranged on the inner wall of the tool housing (3).

6. Scaler according to claim 2, characterised in that the bearing sleeve (24) is mounted at its ends in bearings (28, 29), coupling means (45 - 53) being arranged between the bearings in the bearing sleeve (24) and in a coupling ring (42).

7. Scaler according to claim 6, characterised in that the coupling means are coupling bodies (46) which are displaceable in radial bore holes (45) of the bearing sleeve (24) and with which there are coordinated radial bore holes (48), lying in the coupling ring (42), with a thrust bolt (49), upon which an annular spring (50) acts, in the decoupled position, with the coupling ring (42) having a spring-loaded positioning bolt (51) which is guided in a radial bore hole (52) and which can be engaged into two positioning pockets (53) in the bearing sleeve (24) defining the decoupled position and the coupled position.

8. Scaler according to claim 7, characterised in that the coupling ring (42) has a switching fork (43) by means of which it can be swung by a carrier pin (40) into the decoupled and coupled position.

9. Scaler according to claim 8, characterised in that the carrier pin (40) is secured in a rotatable switch ring (16) which is guided on the cover (12).

10. Scaler according to claim 4, characterised in that the cover (12) has spring-mounted stop bodies (20) which engage into a radial groove (18) and one of which bodies can be engaged into one of two positioning recesses (19) of the switch ring (16).

11. Scaler according to claim 6, characterised in that the bearings (28, 29) are rolling bearings formed by rolling balls (30) which are arranged in recesses (31, 32) of the upper and of the lower bearing bar (5, 6) and are limited by support rings (33, 34) which are arranged on the bearing sleeve (24).

12. Scaler according to claim 2, characterised in that the bearing sleeve (24) is held by means of securing means, for example, a securing pin (36) which is guided in the upper bearing bar (5) or by means of a ball inserted into pockets (71, 72) of the upper bearing bar (5) and the bearing sleeve (24), in a nonrotatable, yet axially displaceable manner in the tool housing (3).

13. Scaler according to claim 1, characterised in that several pockets (47) are incorporated in the shaft (26) of the scraping instrument (27) on the shaft periphery, with which pockets the cutting edge (70) can be securely fixed in various angular positions relative to the grip housing.

**Revendications**

1. Dispositif pour le détartrage des dents comportant un appareil de raclage (27) présentant une lame (70) ainsi qu'un boîtier d'outil (3) dans lequel est guidée, coulissant axialement, une douille de support (24) dans laquelle est maintenu l'appareil de raclage (27), avec aussi un ressort (62) agissant dans le sens du rappel et un doigt d'entraînement (57) placé excentré sur un arbre d'entraînement (55), qui sont accouplés mécaniquement avec la douille de support (24) de manière que l'appareil de raclage (27) exécute un déplacement aller relativement rapide, brusque ou par à-coups vers le boîtier d'outil (3) et un mouvement de retour, relativement lent, à partir du boîtier d'outil (3), caractérisé en ce qu'au boîtier d'outil (3) fait suite un boîtier de poignée (2), à travers lequel est guidé l'arbre d'entraînement (55), en ce qu'avec le boîtier d'outil (3) il forme une pièce coudée (1) servant de poignée et en ce qu'en vue de l'accouplement du doigt d'entraînement (57) sur la douille de support (24) dont la direction de déplacement forme un angle avec l'arbre d'entraînement (55), il est prévu un corps d'excentrique (59) monté tournant coaxialement à l'arbre avec un évidement (61) périphérique, pour former un logement pour le doigt d'entraînement (57) et une surface d'excentrique (67), permettant une avance du corps d'excentrique (59).

2. Dispositif selon la revendication 1, caractérisé en ce qu'il comporte une bascule (63) sur laquelle agissent le ressort (62) et la surface d'excentrique (67), afin de produire un mouvement de va-et-vient et qui, de son côté, agit sur la douille de support (24), par des mouvements de retour.

3. Dispositif selon la revendication 1 ou 2, caractérisé en ce que la douille de support (24) est montée dans un boîtier intérieur (4) qui est formé par une cloison de support (5) supérieure, une cloison de support (6) inférieure et un anneau d'appui (8) situé entre les cloisons de support.

4. Dispositif selon la revendication 1, caractérisé en ce que le boîtier d'outil (3) est fermé par un couvercle (12) opposé à l'appareil de raclage (27).

5. Dispositif selon la revendication 4, caractérisé en ce que le couvercle (12) est serré contre le boîtier intérieur (4) par un écrou annulaire (13) qui est vissé dans un taraudage (14) placé sur la paroi intérieure du boîtier d'outil (3).

**6.** Dispositif selon la revendication 2, caractérisé en ce que la douille de support (24) est montée à ses extrémités, dans des paliers (28, 29), des moyens d'accouplement (45 à 53) étant prévus entre les paliers, dans la douille de support (24) et dans une bague d'accouplement (42).

**7.** Dispositif selon la revendication 6, caractérisé en ce que les moyens d'accouplement sont des corps d'accouplement (46) coulissant dans des trous radiaux (45) de la douille de support (24), auxquels sont associés des trous radiaux (48) situés dans la bague d'accouplement (42) avec un doigt de pression (49) sollicité par un ressort annulaire (50), dans la position de désaccouplement, la bague d'accouplement (42) présentant un doigt de positionnement (51) soumis à l'action d'un ressort, guidé dans un trou radial (52), lequel peut s'accrocher dans deux creux de positionnement (53), pratiqués dans la douille de support (24), définissant la position de désaccouplement et la position d'accouplement.

**8.** Dispositif selon la revendication 7, caractérisé en ce que la bague d'accouplement (42) présente une fourche de manoeuvre (43) par laquelle elle peut être pivotée par un doigt d'entraînement (40), dans la position de désaccouplement et dans la position d'accouplement.

**9.** Dispositif selon la revendication 8, caractérisé en ce que le doigt d'accouplement (40) est fixé dans un anneau de manoeuvre (16) tournant, guidé sur le couvercle (12).

**10.** Dispositif selon la revendication 4, caractérisé en ce que le couvercle (12) présente des corps d'encliquetage (20) élastiques qui s'encliquettent dans une rainure radiale (18) et dont un corps d'encliquetage peut s'encliqueter dans l'un des deux évidements de positionnement (19) de l'anneau de manoeuvre (16).

**11.** Dispositif selon la revendication 6, caractérisé en ce que les paliers (28, 29) sont des paliers de roulement formés par des billes (30) qui sont placés dans des évidements (31, 32) de la cloison supérieure (5) et de la cloison inférieure (6) et sont limités par des bagues d'appui (33, 34) placées sur la douille de support (24).

**12.** Dispositif selon la revendication 2, caractérisé en ce que la douille de support (24) est maintenue par des moyens de blocage, par exemple par un doigt de blocage (36) guidé dans la cloison de support (5) supérieure ou par une bille placée dans des creux (71, 72) de la cloison de support (5) supérieure et de la douille de support (24), de manière à ne pas pouvoir tourner mais à pouvoir coulisser axialement dans le boîtier d'outil (3).

**13.** Dispositif selon la revendication 1, caractérisé en ce qu'il est pratiqué dans la tige (26) de l'appareil de raclage (27) plusieurs creux (47) sur le pourtour de la tige, par lesquels la lame (70) peut être fixée dans différentes positions angulaires par rapport au boîtier de poignée.

FIG. 1

FIG. 4a

FIG. 4b

## FIG. 2

## FIG. 3